# EUROPEAN PATENT APPLICATION

(11) **EP 4 606 590 A1**
(43) Date of publication of application: **27.08.2025**
(21) Application number: 24158906.8
(22) Date of filing: 21.02.2024
(51) Int. Cl.: B41J 11/00, B41J 2/21

(54) **METHOD AND PRINTER FOR MULTI-LAYER INK JET PRINTING AND CURING**

(71) Applicant: Canon Production Printing Holding B.V., 5914 HH Venlo (NL)
(72) Inventor: SEVENICH, Johannes B.M., Venlo (NL); FRIJNTS, Tim R., Venlo (NL)
(74) Representative: Canon Production Printing IP Department

(57) **Abstract**

A method for ink jet printing a multi-layer print job with UV curable ink by means of a printer. The multi-layer print job comprising a plurality of layers intended to be processed in-line on top of each other in a printing step and a curing step. For each layer a first dose of UV curing light to be received by the layer from the curing device when processing the layer is determined. For each layer a second dose of UV curing light to be received by the layer from the curing device when curing at least one layer which is intended to be printed on top of the layer, is determined. For each layer a sum of the first dose and the second dose approximately equals a dedicated predetermined dose of UV curing light. For each layer a number of passes of the print assembly over the print medium which number of passes corresponds to the first dose of UV curing light. The multi-layer print job is processed wherein each layer is printed in the determined number of passes and is cured with the determined first dose of UV curing light.

## Description

### TECHNICAL FIELD OF THE INVENTION

The present invention relates to a method for ink jet processing a multi-layer print job with UV light-curing ink and a printer for carrying out this method.

An ink jet printer typically comprises a carriage that is movable in reciprocation in a main scanning direction across a print medium, e.g. a sheet of paper. The carriage has mounted thereon a print assembly comprising at least one printhead, so that dots of liquid ink may be expelled onto the surface of the paper, and a stripe or swath of the image is printed during each pass of the carriage. Then, the paper is advanced in a sub-scanning direction, so that the next swath may be printed.

The phrase "processing a layer" means printing the layer and curing the layer. For each layer to be deposited towards the print medium, a layer image is derived or extracted from the print job. Hereinafter the layer image will also be called "layer". From the context it will become clear if the wording "layer" is related to a layer image in the print job or one of the layers deposited on top of each other on the print medium.

The term "curing" and "irradiating" are both used hereinafter and have the same meaning.

The layers are built up "in-line", i.e. all layers are printed simultaneously in each pass of the print assembly of the printer over the print medium. Thereto the print head is divided into sections and each section processes one layer. The "in-line" printing of multiple layers is only possible if the printed image is immediately cured after printing of a swath.

### BACKGROUND OF THE INVENTION

The ink that has been deposited on the print medium should be cured, i.e. caused to solidify, relatively quickly, so that the image will not be damaged in subsequent handling or processing steps. Thereto the print assembly also comprises a solvent-based inks may be cured by letting the solvent evaporate from the ink. A hot melt ink jet printer uses ink that is solid at room temperature and is melted in the printhead, and curing is achieved by allowing the ink to cool down. In a print process using light-curing ink, the solidification of the ink is induced by irradiating the printed ink dots with light, preferably UV light. This has the advantage that the curing process can be accelerated and the curing time can be finely controlled, thereby controlling the amount to which the printed ink dots flow out on the paper.

However, the light rays used for irradiating the ink dots must be strong enough to penetrate into the volume of the ink. This requirement is particularly challenging when taking into account that the colorants, i.e. the dyes and/or pigment, of some ink may have a low transparency for the light rays. Examples of ink with low transparency colorants are black ink, as the black colorant may be highly absorptive for the light rays, and white ink, as the white colorant may be highly reflective for the light rays. Even when the irradiation with light is used only for "pinning" the ink dots, i.e. for solidifying only a certain ink layer at the surface and at the rim of the dot, the light has to penetrate into the ink to some extent. As a result, especially the low transparency of black ink and white ink necessitates the use of relatively high dose of UV light to the respective layer.

In order to reduce the relatively high dose of the UV light that is used for curing the ink in an ink jet print process with light-curable ink for each individual pixel the following steps are used: printing a first ink dot of a colour, irradiating the first ink dot with light, printing a second ink dot of the same colour at least partially overlapping with the first one and irradiating the second ink dot with light. In this way an image for a 2-layer print job is created. In general in case of n-layer print job where n > 2, the steps are repeated until n layers are processed.

Each pixel is composed of a plurality of ink layers which have a reduced thickness, so that light rays with relatively low intensity are sufficient for penetrating through this ink layer and curing or pinning the same, before the next layer of the same colour is deposited.

To achieve a higher robustness or a better curing process the printer can switch from bidirectional printing to one-directional printing. However, when doing so, the productivity of the printer will decrease substantially.

It is an object of the present invention to achieve a higher robustness of the prints.

### SUMMARY OF THE PRESENT INVENTION

The object of the present invention is achieved by applying the method according to claim 1.

Useful details of the invention are indicated in the dependent claims.

According to the method of the present invention for each layer a first dose of UV curing light is determined which is to be received by the layer from the curing device when processing the layer. Also for each layer a second dose of UV curing light is determined which is to be received by the layer from the curing device when curing at least one layer which is intended to be printed on top of the layer. The determination of the first dose and the second dose per layer may be determined simultaneously by solving a mathematical constraint problem wherein for each layer a sum of the first dose and the second dose approximately equals the dedicated predetermined dose of UV curing light. Then for each layer a number of passes of the print assembly over the print medium is determined which number of passes corresponds to the first dose of UV curing light. Each layer of the multi-layer print job is printed in the determined number of passes and is cured with the determined first dose of UV curing light.

According to an embodiment at least one layer of the plurality of layers substantially decreases the second dose to be determined for each of the preceding to be processed layers.

According to an embodiment the at least one layer blocks an UV irradiation by the curing device of the layers which are processed before processing the at least one layer.

According to an embodiment the print medium is a substantially imperforate light permeable material. Such a material allows light to pass through it and includes both "transparent material" and "translucent material". The light permeable material is imperforate, although it should be understood that this does not preclude the incorporation of holes, for example for fixing the print medium, the light permeable material remaining substantially imperforate. The print medium may be a transparent film, for example a self-adhesive polyester film to be applied to the outside or inside of a window.

According to an embodiment the method comprises the steps of adapting a jet frequency of ejecting drops of the UV curable ink onto the print medium in order to reach a predetermined productivity of the printer, and re-determining the number of passes per layer accordingly. The carriage velocity is determined by the jet frequency together with a print resolution which is fixed.

According to an embodiment the method comprises the step of determining for each layer the dedicated predetermined dose of UV curing light by taking into account which kind of UV curable ink is intended to be used when printing the layer.

The present invention also relates to a printer for ink jet printing a multi-layer print job with UV curable ink, the printer comprising a print assembly comprising a print head and a curing device, and a print controller to control a processing of the multi-layer print job in a printing step and a curing step, the multi-layer print job comprising a plurality of layers intended to be processed in-line on top of each other, wherein each layer is intended
- to be printed by a different section of the print head,
- to be processed in a plurality of passes of the print assembly across the print medium,
- to receive a dedicated load of UV curable ink, and
- to be irradiated with a dedicated predetermined dose of UV curing light,
and wherein the print controller is configured to perform the steps of the method according to the present invention.

The present invention also relates to a computer program product, including computer readable code embodied on a computer readable medium, said computer readable code comprising instructions for executing the steps of a method according to the present invention.

### BRIEF DESCRIPTION OF THE DRAWINGS

Preferred embodiments of the invention will now be described in conjunction with the drawings, wherein:
- Fig. 1: is a schematic perspective view of a number of parts of an ink jet printer;
- Figs. 2 and 3: are diagrams illustrating a print process according to the invention;
- Fig. 4: is a schematic view of a printer processing a multi-layer print job;
- Fig. 5: is a flowchart of an embodiment of the method according to the present invention; and
- Fig. 6: schematically shows a non-transitory software medium 110 according to the invention.

### DETAILED DESCRIPTION OF THE PREFERRED EMBODIMENTS

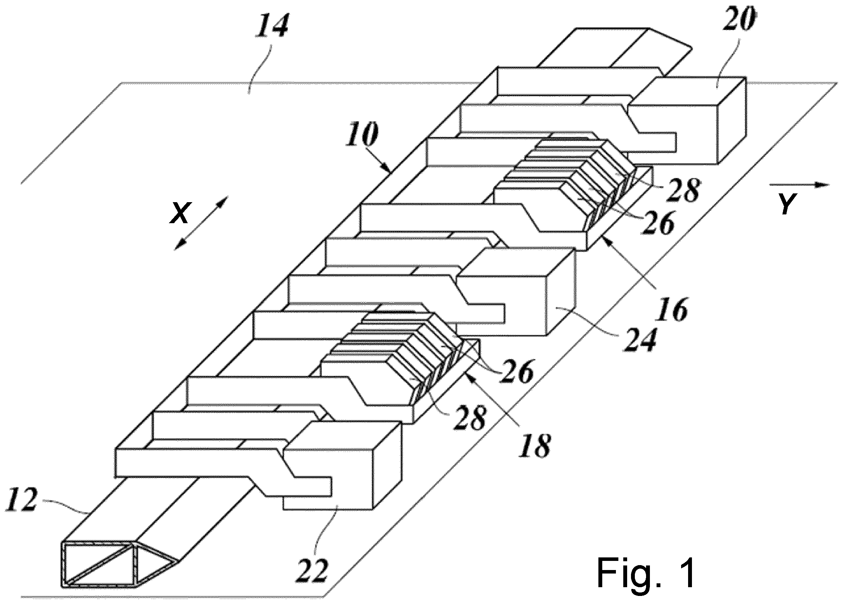

As is shown in Fig. 1, an inkjet printer comprises a carriage 10 that is movable back and forth along a guide rail 12 in a main scanning direction X across a print medium 14 that is advanced step-wise in a sub-scanning direction Y The print medium may be a sheet or a web. The carriage 10 comprises two sets 16, 18 of printheads, two outer irradiating lamps 20, 22 embracing the two sets of printheads, and a third central irradiating lamp 24 intervening between the two sets 16, 18. Each set of printheads comprises printheads 26 for black ink and further printheads 28 for the colours cyan, magenta, yellow and white. The printheads 26, 28 are arranged adjacent to the central irradiating lamp 24. The curing step may be applied before as well as after the printing. Curing before the printing is also called leading pin curing and curing after the printing is also called trailing pin curing. An advantage for leading pin curing is that the ink may coalesce and adhere one swath longer in time. The irradiating lamps 20, 22, 24 are longer - for example twice as long - than the printheads 26, 28 in the Y direction. This is advantageous, since a large amount of pin curing light is just provided to the entirely printed print. Also a post curing lamp (not shown) may be provided.

A conventional CMYK printhead array with an additional white colour in any position can be used as the different layers are separately software driven. The printhead for the colour white may be placed anywhere else in the print head.

In Fig. 1 two printheads 26 are provided for black ink. However, in another embodiment only one print head for black ink is provided. Fig. 1 shows two printhead arrays CMYKW. However, printers which have at least one print head array CMYK or at least one print head array CMYKW may also be envisioned. For said printers at least one of the irradiation lamps 20, 22 may be provided, while the in-between positioned irradiation lamp 24 is left out of the configuration of the printer.

As is known in the art, each printhead 26, 28 comprises an array of nozzles that are facing the print medium 14, so that a plurality of pixel lines can be printed in one pass of the carriage 10. The irradiating lamps 20, 22 and 24 are arranged to face the print medium 14 so as to irradiate the ink dots that have just been printed with ultraviolet light in order to cure or pin the ink. Ink dots that have been printed with one of the printheads of the set 16 will be cured either with the lamp 20 or with the lamp 24, depending on the direction of travel of the carriage 10. Similarly, ink dots that have been printed with one of the printheads of the set 18 will be cured either with the lamp 22 or with the lamp 24.

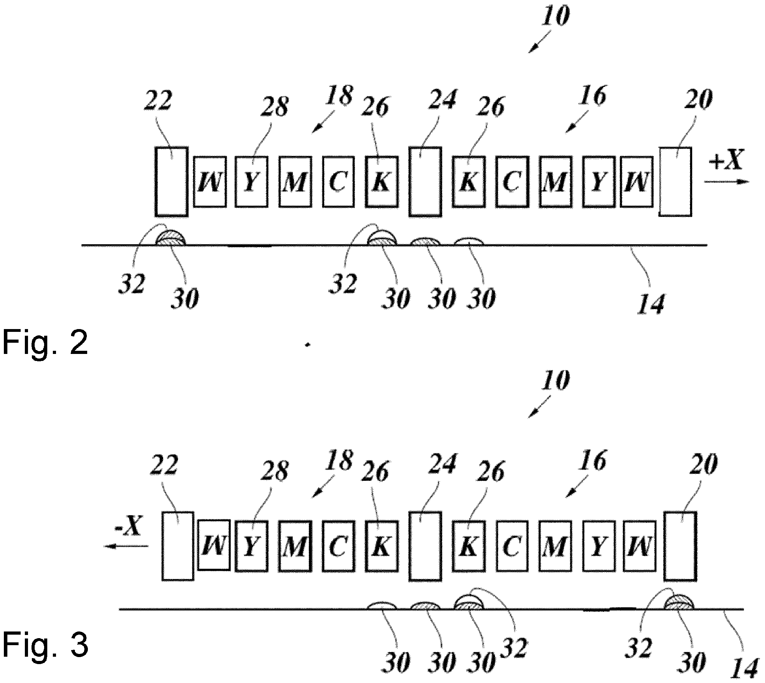

The operation of the printer illustrated in Fig. 1 will be explained in greater detail in conjunction with Figs. 2 and 3 which, however, show a simplified embodiment in which each of the two sets 16, 18 has only a single printhead 26 for black ink (K). The colours assigned to the printheads 28 are designated as Y, M, C and W.

In Fig. 2, the carriage 10 moves in positive X-direction, i.e. to the right of the drawing. The printheads and lamps that are active in this state have been highlighted by bold lines. These are the five printheads of the set 16, the black printhead 26 of the set 18 and the lamps 22 and 24. During the travel of the carriage, the printhead 26 of the set 16 has printed first dots 30 in subsequent pixel positions. One of the dots 30 is just being printed, another one is being cured under the lamp 24 (symbolized by hatching), and a third one has been cured already and is now in a position underneath the printhead 26 of the second set 18, and this printhead is used for printing a second black dot 32 on top of the first one. The second dot 32 is cured by means of the lamp 22, as has been symbolized by another pair of dots 30, 32. Thus, a black pixel is composed of two dots which have only a comparatively small thickness and are cured in subsequent curing steps. As a result, for a given printing speed, the ink is sufficiently cured.

Fig. 3 illustrates a state in which the carriage 10 moves in negative X-direction. Here, the first dots 30 are printed with the printhead 26 of the second set 18, and the second dots are printed with the printhead 26 of the set 16, and the lamps 24 and 20 are used for curing.

The lamps 20, 22 and 24 may be Hg-lamps, Xe-flash lamps, blue LEDs or UV LEDs, the latter lamps in view of the relatively low power.

The printing method that has been shown for black ink in Figs. 2 and 3 may equivalently be applied into inks in the other colours or even to combinations of inks in different colours. The order of the inks in Figs. 2 and 3 is depicted as W, Y, M, C, K or K, C, M, Y, W. However other orders of the inks may be envisioned according to the present invention.

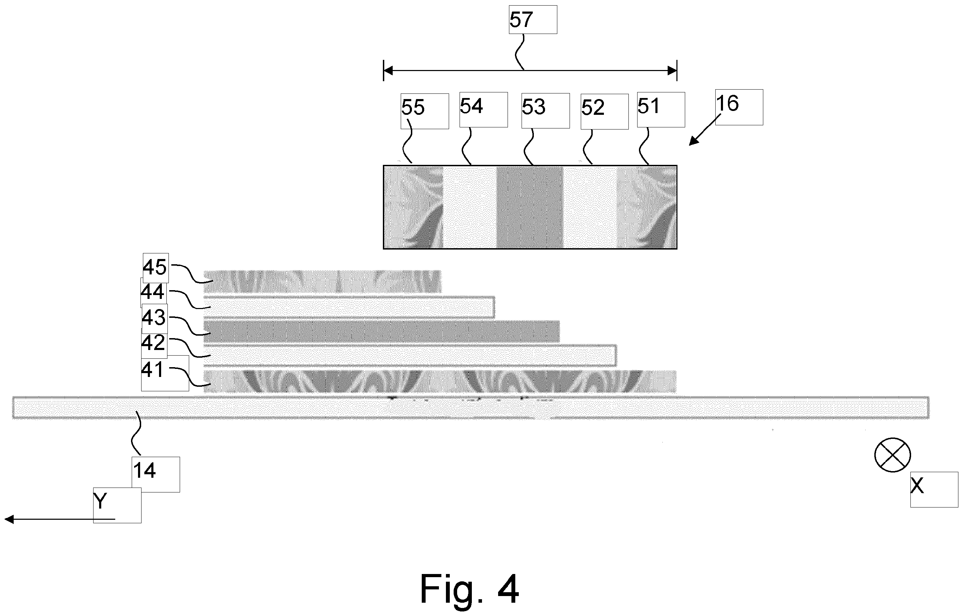

Fig. 4 shows an example of the set 16 of print heads from another angle than in Figs. 2 and 3. The orientation of the set 16 can be derived from Figs. 2 and 3, the media transport direction Y and the scanning direction X of the set 16 of print heads perpendicular to the drawing of Fig. 4. The set 16 is sectioned into 5 sections. In this example a first section 51 is configured to print a first layer 41 on the print medium 14, a second section 52 is configured to print a second layer 42 on top of the first layer 41, a third section 53 is configured to print a third layer 43 on top of the second layer 42, a fourth section 54 is configured to print a fourth layer 44 on top of the third layer 43, a fifth section 55 is configured to print a fifth layer 45 on top of the fourth layer 44.

For convenience reasons the curing lamps 20, 24 are not shown in Fig. 4. Also for convenience reasons only one set 16 of printheads is shown instead of the whole print assembly 10 shown in Fig. 1.

The curing lamps 20, 24 (see Fig. 1) are placed at both sides of the set 16 in the scanning direction X . During printing the curing lamps 20, 24 are curing over the full printhead width 57. The layers 41 - 45 are built up "in-line", so at all layers 41 - 45 is printed in one pass of the set 16 in the scanning direction X. After one or more passes of the print assembly in the X direction, the print assembly is moved in the Y direction relative to the print medium over a distance of 1/5 of the print head width 57.

When printing in-line all layers, at the end of the printing of the multi-layer print job it is desired to have all layers sufficiently cured. The following scheme shows the relationships between a desired degree of curing Z which is equal for all 5 layers, and a first dose D₁ of curing for a particular layer which takes place when printing the particular layer and a second dose D₂ of curing for the particular layer which takes place when printing the layer(s) on top of the particular layer.

| Number of layer | D₁ | D₂ | Desired curing |
|---|---|---|---|
| 45 | a₅ | 0 | Z |
| 44 | a₄ | f₅₄ * a₅ | Z |
| 43 | a₃ | f₄₃ * a₄ + f₅₃ * a₅ | Z |
| 42 | a₂ | f₃₂ * a₃ + f₄₂ * a₄ + f₅₂ * a₅ | Z |
| 41 | a₁ | f₂₁ * a₂ + f₃₁ * a₅ + f₄₁ * a₄ + f₅₁ * a₅ | Z |

Each layer row in the scheme leads to an equation, wherein the sum of the first dose D₁ and the second dose D₂ equals the desired curing dose Z per layer, i.e. D₁ + D₂ = Z. The fractions fᵢⱼ (wherein 1 ≤ j ≤ i ≤ 5) may be predetermined by tests on the print medium with the printers. The fraction fᵢⱼ is the fraction of the original dose ai (D₁) applied to the i-th layer which also (partially) cures the j-th layer. So the scheme represents a set of 5 linear independent equations with 5 unknown variables, i.e. a solvable set of equations. When solving the set of equations, the variables a₁ - as become known and can be applied in the printing of the layers according to the present invention. For a layer 4i (i =1... 5) the number of passes to print the layer 4i is determined to correspond to the dose D₁, more precisely the variable aᵢ.

Usually for the fractions it holds that fᵢⱼ > fᵢ₍ⱼ₋₁₎; however, this may not always be true, for example, when the kind of ink is different for the subsequent ink layers 41 - 45.

For example, if the third layer 43 is a blocking layer, then the fractions f₅₂, f₅₁, f₄₂, f₄₁, will be zero and the fractions f₃₂, f₃₁ will be approximately zero. Then the solution for the variables a₁ and a₂ will become larger and thus the number of passes for the first layer 41 and the second layer 42 will also increase when said number of passes are determined according to the present invention.

Instead of a set of equations a set of inequalities may be solved, for example D₁ + D₂ ≥ Z, wherein Z is a minimal desired dose.

Since the number of passes is an integer and the variables aᵢ are real numbers, the precise (real) number of passes will be rounded up or down to an integer number of passes.

In the scheme here-above it may also be taken into account which kind of ink is used in the layer. For example, a white ink layer or a black ink layer need a larger curing dose than a coloured CMYK ink layer. Thereto in the scheme shown here-above the desired curing dose Z may be determined dedicatedly for each layer, i.e. the desired curing amount dose Z may not be a constant for all layers, but may vary as a desired curing amount Zᵢ dependent on the kind of ink used in the i-th layer 4i. To determine the curing dose for an ink layer a one-layer job may be printed and a scratch test may be executed upon the resulting print of the one-layer job in order to test a robustness of the print. For each kind of ink a dedicated one-layer job may be printed.

In the example in Fig. 4 a 5-layer print is shown. The 5-layer print is normally printed on a print medium which is a clear film or a transparent medium so that on both sides of the print medium an image is visible. The first layer 41 is a bottom image consisting of CMYKW ink colours. However, other ink colours may be envisioned. The bottom image may be a design image which means any graphical image such as an indicia, a photographical image or a coloured image of any type. The second layer 42 is a white ink layer which serves as an underground for the bottom image. The third layer 43 is a blocking layer to prevent shine through of the images in the first layer 41 and the fifth layer 55. The third layer 43 may consist of black ink, or a white ink with a mixture of CMY(K) coloured inks. The fourth layer 44 is a white ink layer which serves as an underground for a top image which is printed in the fifth layer 45. The fifth layer 45 is a top image consisting of CMYKW ink colours. However, other ink colours may be envisioned. The top image may be a design image which means any graphical image such as an indicia, a photographical image or a coloured image of any type.

Tests of the inventors have shown for example that for the 5-layer print job as shown in Fig. 4 the number of passes of the respective layers 41 - 45 resulting in an optimal robustness is 6, 16, 16, 8, 6. In this particular case the 5-layer print job is bi-directionally printed at a jet frequency of 50 kHz. The first layer 41 is processed in 6 passes, the second layer 42 is processed in 16 passes, the third layer 43 is processed in 16 passes, the fourth layer 44 is processed in 8 passes and the fifth layer 45 is processed in 6 passes. The different number of passes per print player is realised by making smaller sub-scanning steps in the Y direction between the passes in the X direction when more passes are needed, and by allocating a larger fraction of the printhead to the layer. In practice a total number of passes is added up and used to calculate a step size and printhead fractions and related nozzle numbers per layer. Until now the 5-layer print job was processed with a jet frequency of 35 kHz which increased the robustness versus a jet frequency of 50 kHz, but was not as effective as the method mentioned hereinabove (for the same productivity) as the pin curing dose was increased for all layers instead of only the layers where the increased pin curing dose was needed. Until now the 5-layer print job was processed with a number of passes 6, 8, 8, 8, 6 for the respective layers 41 - 45.

Therefore a jet frequency of the nozzles of the printhead is increased from 35 kHz to 50 kHz in order to compensate for the loss of productivity since according to the present invention the number of passes (16) of the second layer 42 and the third layer 43 is increased - even doubled - with respect to a number of passes (8) which was used until now for the second layer 42 and the third layer 43.

The greater robustness is equivalent with an improvement of the adhesion of the printed layers with the print medium and between the printer layers themselves.

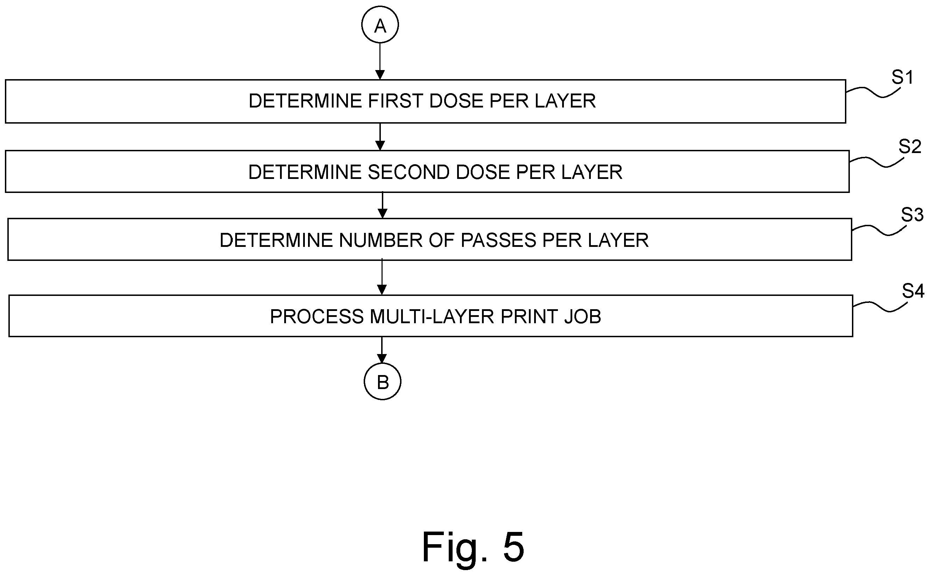

Fig. 5 is a flowchart of an embodiment of the method according to the present invention. The method starts in a starting point A which leads to a first step S1.

In the first step S1 a first dose of UV curing light is determined for each layer to be received by the layer from the curing device when processing the layer.

In a second step S2 a second dose of UV curing light is determined for each layer to be received by the layer from the curing device when curing at least one layer which is intended to be printed on top of the layer.

For each layer a sum of the first dose and the second dose approximately equals the dedicated predetermined dose of UV curing light.

The first step S1 and the second step S2 are related, i.e. the determination of the first and second dose is the result of solving a set of equations as described hereinbefore.

In a third step S3 a number of passes of the print assembly over the print medium is determined for each layer. The number of passes corresponds to the first dose of UV curing light.

In a final step S4 the multi-layer print job is processed wherein each layer is printed in the determined number of passes and is cured with the determined first dose of UV curing light.

The method ends in an end point B.

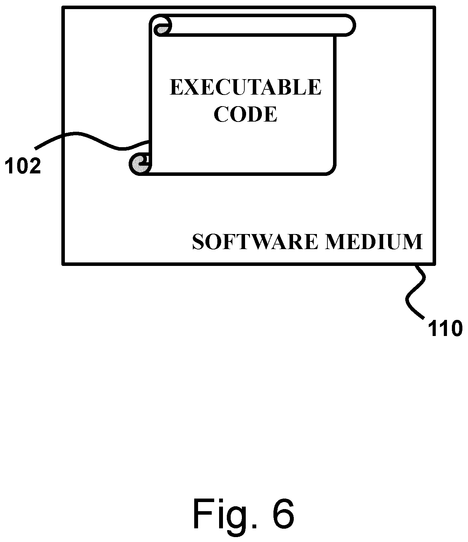

Fig. 6 schematically shows a non-transitory software medium 110 according to the invention. The software medium 110 comprises executable code 102 configured to, when executed, perform the method according to the invention, e.g. as described with respect to either the printer shown in Fig. 1 or the method shown in Fig. 5 and/or according to any of the variants and modifications of the printer and/or of the method described hereinbefore.

The non-transitory software medium 110 may, specifically, be formed as a CD or a CD-ROM, a DVD or a DVD-ROM, a BluRay disc or a BluRay-ROM disc, a magnetic hard drive, a solid state disk (SSD) hard drive, a USB memory device and so on.

## Claims

1. A method for ink jet printing a multi-layer print job with UV curable ink by means of a printer having a print assembly comprising a print head and a curing device, the multi-layer print job comprising a plurality of layers intended to be processed in-line on top of each other in a printing step and a curing step, wherein each layer is intended to be processed in a plurality of passes of the print assembly across the print medium, to receive a dedicated load of UV curable ink and to be irradiated with a dedicated predetermined dose of UV curing light,
**characterised by** the steps of:
- determining for each layer a first dose of UV curing light to be received by the layer from the curing device when processing the layer,
- determining for each layer a second dose of UV curing light to be received by the layer from the curing device when curing at least one layer which is intended to be printed on top of the layer,
wherein for each layer a sum of the first dose and the second dose approximately equals the dedicated predetermined dose of UV curing light,
- determining for each layer a number of passes of the print assembly over the print medium which number of passes corresponds to the first dose of UV curing light, and
- processing the multi-layer print job wherein each layer is printed in the determined number of passes and is cured with the determined first dose of UV curing light.

2. A method according to claim 1, wherein at least one layer of the plurality of layers substantially decreases the second dose to be determined for each of the preceding to be processed layers.

3. A method according to claim 2, wherein the at least one layer blocks an UV irradiation by the curing device of the layers which are processed before processing the at least one layer.

4. A method according to any of the preceding claims, wherein the print medium is a substantially imperforate light permeable material.

5. A method according to any of the preceding claims, wherein the method comprises the steps of adapting a jet frequency of ejecting drops of the UV curable ink onto the print medium in order to reach a predetermined productivity of the printer, and re-determining the number of passes per layer accordingly.

6. A method according to any of the preceding claims, wherein the method comprises the step of determining for each layer the dedicated predetermined dose of UV curing light by taking into account which kind of UV curable ink is intended to be used when printing the layer.

7. A printer for ink jet printing a multi-layer print job with UV curable ink, the printer comprising a print assembly comprising a print head and a curing device, and a print controller to control a processing of the multi-layer print job in a printing step and a curing step, the multi-layer print job comprising a plurality of layers intended to be processed in-line on top of each other,
wherein each layer is intended
- to be printed by a different section of the print head,
- to be processed in a plurality of passes of the print assembly across the print medium,
- to receive a dedicated load of UV curable ink, and
- to be irradiated with a dedicated predetermined dose of UV curing light,
and wherein the print controller is configured to perform the steps of the method according to any of the preceding claims.

8. A computer program product, including computer readable code embodied on a computer readable medium, said computer readable code comprising instructions for executing the steps of a method according to any one of the claims 1 - 6.
